# EUROPÄISCHE PATENTANMELDUNG

(11) **EP 1 873 504 A1**
(43) Veröffentlichungstag der Anmeldung: **02.01.2008**
(21) Anmeldenummer: 06116246.7
(22) Anmeldetag: 28.06.2006
(51) Int. Cl.: G01G 23/01

(54) **Kalibriergewichtsanordnung für eine elektronische Waage**

(71) Anmelder: Mettler-Toledo AG, 8606 Greifensee (CH)
(72) Erfinder: Genoud, Dominique, 4600 Olten (CH); Schilling, Peter, 8854 Siebnen (CH); Koeppel, Thomas, 8618 Oetwil am See (CH); Scheu, Matthias, 8610 Uster (CH)

(57) **Zusammenfassung**

Die Kalibriergewichtsanordnung (4, 104, 204, 304, 404) für eine eine Kraftübertragungsvorrichtung (1,201) aufweisende elektronische Waage umfasst ein mit der Kraftübertragungsvorrichtung (1,201) koppelbares Kalibriergewicht (3, 103, 203, 303, 303A, 303B, 403), einen Transfermechanismus und einen Antrieb zur geführten Bewegung des Kalibriergewichts (3, 103, 203, 303, 303A, 303B, 403). Der Antrieb weist einen mit dem Transfermechanismus zusammenwirkenden Aktuator (18) und mindestens ein den Aktuator (18) antreibendes piezoelektrisches Element (19) auf. Der Aktuator (18) umfasst mindestens zwei Elemente, die mittels mindestens eines wiederholt erfolgenden und sich wieder lösenden Reibschlusses miteinander in Wechselwirkung stehen.

## Beschreibung

Die Erfindung betrifft eine Kalibriergewichtsanordnung für eine elektronische Waage und insbesondere einen Antrieb für eine Kalibriergewichtsanordnung.

Elektronische Waagen werden häufig mittels eines internen Kalibriergewichts kalibriert. Für eine Kalibrierung wird ein Kalibriergewicht mit einer definierten Masse in Kraftkontakt mit der in einer Kraftmesszelle einer Waage angeordneten Kraftübertragungsvorrichtung gebracht und dann ein Referenzwert ermittelt. Anhand dieses Referenzwerts können weitere Wägeparameter der Waage angeglichen werden. Nach erfolgreicher Kalibrierung wird der Kontakt zwischen dem Kalibriergewicht und der Kraftübertragungsvorrichtung wieder gelöst und das Kalibriergewicht in einer Ruheposition arretiert. Das Kalibriergewicht wird dabei durch einen Transfermechanismus aus einer Ruheposition in eine Kalibrierposition und zurück bewegt, wobei der Transfermechanismus mindestens ein Hebeelement umfasst, welches mit einem Antrieb zusammenwirkt. In der Kalibrierposition steht das Kalibriergewicht in Kraftkontakt mit der Kraftübertragungsvorrichtung, in der Ruheposition besteht kein Kraftkontakt.

Es sind verschiedene Arten von Hebeelementen und Ausführungen von Kalibriergewichtsanordnungen bekannt.

In der EP 0 468 159 B1 wird ein Kalibriergewicht offenbart, welches über paarweise horizontal gegeneinander verschiebbare Keile vertikal bewegt und so in Kraftkontakt mit der Kraftübertragungsvorrichtung der Waage gebracht wird. Der Antrieb dieses Hebelements erfolgt über eine mit den Keilen verbundene Spindel und einen motorischen Antrieb.

Ein ebenfalls vertikales Anheben bzw. Absenken erfährt ein Kalibriergewicht durch eine in der EP 0 955 530 A1 beschriebene Vorrichtung. Das Gewicht ruht auf einer Auflage, welche durch ein elektrisch angetriebenes Hebeelement bewegt wird.

In der DE 203 18 788 U1 wird beschrieben, wie ein einstückiges Kalibriergewicht durch ein rampenartiges Hebeelement angehoben und abgesenkt wird, wobei das durch einen linearen Antrieb angetriebene Hebeelement eine Art schräge Parallelbewegung ausführt.

Bei vielen Waagen sind die Kalibriergewichtsanordnung und die Kraftübertragungsvorrichtung hintereinander angeordnet, wie es in der EP 0 955 530 A1 offenbart ist. Das Kalibriergewicht kann aber auch in beispielsweise zwei Kalibriergewichte aufgeteilt und seitlich an der Kraftübertragungsvorrichtung befestigt sein, wie die in der EP 0 789 232 B1 offenbarten kreiszylindrischen Kalibriergewichte. Die beiden identischen Gewichte sind an zwei gegenüberliegenden Seiten der Kraftübertragungsvorrichtung angeordnet. Es werden zwei unterschiedliche Mechanismen zur Bewegung der Kalibriergewichte beschrieben. Im ersten Fall ruht das einen Führungsstift aufweisende Kalibriergewicht auf einer als Träger ausgestalteten Kalibriergewichtsauflage und wird zur Kalibrierung durch Abkippen der einseitig gelagerten Kalibriergewichtsauflage auf zwei darunter liegende, mit der Kraftübertragungsvorrichtung verbundene, als Stangen oder Hebel gestaltete Kalibriergewichtsträger abgesenkt. In einer zweiten Variante liegt das Gewicht in seiner Ruheposition auf einer zwischen den mit der Kraftübertragungsvorrichtung verbundenen Kalibriergewichtsträgern angeordneten Kalibriergewichtsauflage. Durch eine vertikale Abwärtsbewegung der Kalibriergewichtsauflage wird das Kalibriergewicht zur Kalibrierung in Kontakt mit den Kalibriergewichtsträgern gebracht.

Angetrieben werden die erwähnten Hebeelemente im Allgemeinen durch kleine Servomotoren. Nachteilig an der Verwendung von Servomotoren ist, dass ein solcher vergleichsweise viel Platz in der Kraftmesszelle der Waage benötigt, wodurch sowohl die Kraftmesszelle als auch die Waage selbst unnötig vergrössert wird.

Gerade bei hochempfindlichen elektronischen Waagen wird das Wägeergebnis durch elektrostatische Aufladung und Wechselwirkungen beeinflusst und sogar verändert. Die für den Antrieb der Transfermechanismen verwendeten Servomotoren enthalten elektrisch nicht leitende Getriebeteile, welche im Betrieb über Reibung elektrostatische Aufladungen erzeugen. Die entstehenden elektrostatischen Felder, jedoch auch elektromagnetische Felder konventionelle Elektromotoren reichen aus, um das Wägeergebnis, insbesondere von hochempfindlichen Waagen zu beeinflussen.

Die bekannten Kalibriergewichtsanordnungen weisen fast immer relativ grosse Antriebe auf. Eine Verbesserung der Kalibriergewichtsanordnung erfordert somit insbesondere eine Optimierung und Miniaturisierung des Antriebs des Transfermechanismus. Der Antrieb muss sehr klein, kompakt und flexibel einsetzbar sein.

Gelöst wird diese Aufgabe durch eine Kalibriergewichtsanordnung mit den Merkmalen gemäss Anspruch 1. Die Kalibriergewichtsanordnung für eine eine Kraftübertragungsvorrichtung umfassende elektronische Waage weist mindestens ein mit der Kraftübertragungsvorrichtung der Waage koppelbares Kalibriergewicht sowie einen Antrieb und einen Transfermechanismus zur geführten Bewegung des Kalibriergewichts auf. Der Antrieb weist einen mit dem Transfermechanismus zusammenwirkenden Aktuator und mindestens ein den Aktuator antreibendes piezoelektrisches Element auf. Der Aktuator umfasst mindestens zwei Elemente, die mittels mindestens eines wiederholt erfolgenden und sich wieder lösenden Reibschlusses miteinander in Wechselwirkung stehen.

Als Aktuator sollen im vorliegenden Zusammenhang die eine Bewegung ausführenden Elemente des Antriebs verstanden werden, wobei häufig durch das Zusammenwirken von mindestens zwei Elementen eine hinsichtlich Art und Richtung gewünschte Bewegung erfolgt.

Eine Kalibriergewichtsanordnung, die mit einem ein piezoelektrisches Element aufweisenden Antrieb ausgestattet ist, hat den Vorteil, dass wenig Platzbedarf für das Anbringen des Antriebs an derselben vonnöten ist. Der Antrieb ist klein und kompakt und kann daher an beliebiger Stelle untergebracht sein. Ein weiterer Vorteil besteht darin, dass elektrostatische Aufladungen des Antriebs beziehungsweise von Teilen desselben vermieden werden. Ferner weist der Antrieb keine magnetischen oder magnetisierbaren Teile auf, die in einer nach dem Prinzip der elektromagnetischen Kraftkompensation arbeitenden Kraftmesszelle einer Waage störend sein könnten.

Der Transfermechanismus der Kalibriergewichtsanordnung weist ein Hebeelement, eine Kalibriergewichtsauflage und eine Führungsvorrichtung auf. Dadurch wird eine geführte Bewegung, insbesondere eine Vertikal- und/oder Rotationsbewegung, der Kalibriergewichtsauflage und damit auch des Kalibriergewichts bewirkt, so dass das Kalibriergewicht im Falle einer Kalibrierung in Kraftkontakt mit der Kraftübertragungsvorrichtung der Kraftmesszelle einer Waage gebracht werden kann. Nach erfolgreicher Kalibrierung muss dieser Kraftkontakt wieder gelöst und der Transfermechanismus wieder in seine Ruheposition gebracht werden. Diese Aufgabe wird durch die besonders vorteilhafte Wirkung des Antriebs gelöst, denn die Bewegungsrichtung ist bei dieser Art von Antrieb umkehrbar, das heisst die Aufwärts- und die Abwärtsbewegung wird von denselben Elementen bewerkstelligt.

Ein weiterer Vorteil des Antriebs ist das einfache Ansteuern eines erwünschten Geschwindigkeitsprofils für die Bewegung eines Kalibriergewichts, welches mittels des Transfermechanismus in seine Kalibrierposition gebracht werden soll oder von dieser wieder entfernt werden soll. Es ist vorteilhaft, wenn eine Übergabe eines Kalibriergewichts, das heisst wenn dieses in Kraftkontakt mit der Kraftübertragungsvorrichtung gelangt, mit möglichst geringer Geschwindigkeit ausgeführt wird, damit Erschütterungen weitestgehend vermieden werden und ausserdem eine genaue Positionierung des Kalibriergewichts auf dem mit der Kraftübertragungsvorrichtung verbundenen Kalibriergewichtsträger ermöglicht wird.

Eine weitere Besonderheit besteht darin, dass die in den meisten Fällen vertikale Position der Kalibriergewichtsauflage im stromlosen Zustand des Antriebs durch Selbsthemmung des Antriebs fixiert ist.

In einer vorteilhaften Ausgestaltung umfasst der Antrieb einen piezoelektrischen Linearmotor, der mindestens ein piezoelektrisches Element und ein Vorschubelement aufweist. Dabei kann die Kalibriergewichtsauflage direkt auf dem Vorschubelement des Linearmotors angeordnet sein oder dessen Kraft kann über ein zwischengeschaltetes Umlenkelement, beispielsweise einen Hebel auf die Kalibriergewichtsauflage wirken.

Eine weitere mögliche Ausgestaltung der Kalibriergewichtsanordnung besteht darin, dass der Antrieb einen rotatorischen piezoelektrischen Motor, insbesondere einen Wanderwellenmotor oder einen mit einem ringförmigen Piezoelement versehenen Motor, umfasst, welcher eine Welle aufweist, auf der das Hebeelement mittels einer in die Welle integrierten Spindel eine Vertikalbewegung ausführt.

In einer Weiterbildung des erfindungsgemässen Gegenstandes kann der Antrieb eine Sensorfunktionalität zur Funktionskontrolle des Transfermechanismus aufweisen. Die Überwachung des Stroms zur Aktivierung des piezoelektrischen Elements oder die der Induktivität des Regelkreises kann beispielsweise dazu herangezogen werden, die Position des Hebeelements beziehungsweise des Kalibriergewichts festzustellen.

In einer bevorzugten Ausführungsform weist das piezoelektrische Element des Antriebs der Kalibriergewichtsanordnung einen Antriebsfinger auf, der sich auf einer elliptischen Bahn bewegt, wobei der Antriebsfinger auf dieser Bahn periodisch mit einem Antriebsrad in Kontakt im Sinne einer reibschlüssigen oder formschlüssigen Verbindung gelangen kann. Ein solcher piezoelektrischer Antrieb ist beispielsweise in der WO 01/71899 offenbart. Der Antriebsfinger bringt das Antriebsrad sowie eine mit einem Aussengewinde versehene Welle zur Rotation, wobei entlang der Welle eine mit einem Innengewinde versehene Führungsplattform verschiebbar ist. Der Antriebsfinger kann auf seiner elliptischen Bahn jedoch auch direkt auf das Hebeelement oder die Kalibriergewichtsauflage wirken, d.h. diese direkt durch periodisch erfolgenden reibschlüssigen oder formschlüssigen Kontakt bewegen.

Es sind verschiedenste Ausgestaltungen für das Hebeelement einer Kalibriergewichtsanordnung denkbar. Beispielsweise ist das Hebeelement des Transfermechanismus als Excenter oder als sich paarweise gegeneinander verschiebende Keile ausgestaltet. Das Hebeelement des Transfermechanismus kann allerdings auch als mindestens ein Kniehebelelement ausgebildet sein.

Infolge der unerwünschten Wärmeentwicklung des Antriebs ist der Antrieb in einer Aussparung in der Grundplatte, auf welcher die Kraftübertragungsvorrichtung montiert ist, angeordnet, wobei die Grundplatte im Bereich der Aussparung eine geringere Dicke aufweisen kann, worin eine Öffnung für den Durchtritt mindestens eines Teils des Hebeelements, beispielsweise eine Welle, die in der Öffnung gelagert sein kann, angeordnet ist. Die überschüssige Wärme wird somit über die Grundplatte und gegebenenfalls das Gehäuse abtransportiert.

Antriebe, die ein piezoelektrisches Element aufweisen sind aufgrund des geringen Platzbedarfs besonders dazu geeignet, in einer Kalibriergewichtsanordnung von Wägemodulen, die Kraftmesszellen geringer Ausdehnung in der Ebene orthogonal zur Lastrichtung aufweisen, eingesetzt zu werden. Sie treiben beispielsweise in einem Verbund von Wägemodulen die Hebeelemente in den Transfermechanismen der Kalibriergewichtsanordnungen einzelner Kraftmesszellen an. Dabei wird die Kraftübertragungsvorrichtung jeder Kraftmesszelle individuell mit einem jeweiligen Kalibriergewicht gekoppelt. Dies ist besonders dann nutzbringend, wenn nicht sämtliche Kraftmesszellen des Verbunds von Wägemodulen kalibriert werden müssen, sondern nur einzelne davon. Eine solche Kraftmesszelle, die zum Einbau in eine Aufnahmestruktur mit mehreren Kraftmesszellen geeignet ist, wobei die Kraftmesszelle in einem Bauraum angeordnet ist, dessen Ausdehnung in einer Ebene orthogonal zur Lastrichtung durch die Bauräume benachbarter Kraftmesszellen begrenzt ist, kann mit Vorteil eine erfindungsgemässe Kalibriergewichtsanordnung aufweisen.

In besonders vorteilhafter Ausgestaltung sind der Antrieb und der Transfermechanismus unterhalb oder oberhalb der jeweiligen Kraftmesszelle innerhalb deren Bauraum angeordnet.

Ein ein piezoelektrisches Element aufweisender Antrieb kann selbstverständlich in einem Verbund von Wägemodulen zur gleichzeitigen Kopplung von mehreren Kalibriergewichten an den jeweiligen Kraftmesszellen von mindestens zwei Wägemodulen, beziehungsweise der Entkopplung derselben, verwendet werden. Der Verbund von Wägemodulen beinhaltet mindestens einen Transfermechanismus und mindestens je ein, einem jeden Wägemodul zugeordnetes Kalibriergewicht, welches mit dem Kalibriergewichtsträger des zugeordneten Wägemoduls koppelbar beziehungsweise von dieser entkoppelbar ist. Der mindestens eine Transfermechanismus weist miteinander verbundene Kalibriergewichtsauflagen für die Kalibriergewichte von mindestens zwei zugeordneten Wägemodulen auf.

Es sind Kalibriergewichtsanordnungen mit einem oder mehreren Kalibriergewichten zur Kopplung mit einer Kraftübertragungsvorrichtung mittels eines Transfermechanismus realisierbar. Diese Variante der nacheinander aufleg- und wieder abhebbar angeordneten Kalibriergewichte eignet sich vor allem dazu, eine Linearitätsmessung durchzuführen.

Die Anordnung einer Kalibriergewichtsanordnung in Bezug auf eine Kraftübertragungsvorrichtung einer elektronischen Waage sowie mehrere Ausführungsformen der Kalibriergewichtsanordnung sind in den Figuren dargestellt, welche im Folgenden beschrieben werden. Es zeigen:
- Fig. 1: eine schematische, vereinfachte Seitenansicht einer Kraftübertragungsvorrichtung einer elektronischen Waage mit verlängerten Kalibriergewichtsträgern und einer in der Verlängerung der Kraftübertragungsvorrichtung angeordneten Kalibriergewichtsanordnung mit einem Kalibriergewicht in der Ruheposition;
- Fig. 2: eine schematische, vereinfachte Seitenansicht der Kraftübertragungsvorrichtung und Kalibriergewichtsanordnung von Figur 1 während der Kalibrierung;
- Fig. 3: eine Seitenansicht einer Kalibriergewichtsanordnung mit einem von dem in den Figuren 1 und 2 gezeigten verschiedenen Transfermechanismus;
- Fig. 4: eine Sicht auf die Kalibriergewichtsanordnung aus Figur 3 von oben;
- Fig. 5: eine perspektivische Ansicht der Kalibriergewichtsanordnung aus den Figuren 3 und 4 in einer Explosionsdarstellung;
- Fig. 6: eine Seitenansicht einer Kalibriergewichtsanordnung als Ausschnittvergrösserung der Anordnung aus Figur 1, wobei der Antrieb in einer Aussparung der Grundplatte angeordnet ist;
- Fig. 7: eine vereinfachte, schematische Seitenansicht eines Transfermechanismus mit einem als Kniehebelelement gestalteten Hebeelement;
- Fig. 8: eine vereinfachte, schematische Seitenansicht einer weiteren Ausführungsform eines Transfermechanismus mit einem als Kniehebelelement gestalteten Hebeelement;
- Fig. 9: eine perspektivische Darstellung einer Aufnahmestruktur mit zwei Wägemodulen mit oberhalb der Kraftmesszelle und unterhalb der Kraftmesszelle angeordneten Parallelführungsmembranen und der Bauraum eines Wägemoduls;
- Fig. 10: eine perspektivische Darstellung einer Kraftmesszelle mit geringen Abmessungen in der Ebene senkrecht zur Lastrichtung mit einer Kalibriergewichtsanordnung für ein Kalibriergewicht;
- Fig. 11: eine perspektivische Darstellung einer Kraftmesszelle mit geringen Abmessungen in der Ebene senkrecht zur Lastrichtung mit einer Kalibriergewichtsanordnung für zwei Kalibriergewichte;
- Fig. 12: eine perspektivische Ansicht einer Kraftübertragungsvorrichtung mit einer seitlich daran angeordneten Kalibriergewichtsanordnung, welche ein Kalibriergewicht durch ein vertikales Absenken der Kalibriergewichtsauflage in Kraftkontakt mit der Kraftübertragungsvorrichtung bringt;
- Fig. 13: eine perspektivische Ansicht einer Kraftübertragungsvorrichtung mit einer seitlich daran angeordneten Kalibriergewichtsanordnung, welche ein Kalibriergewicht durch eine Kippbewegung der Kalibriergewichtsauflage in Kraftkontakt mit der Kraftübertragungsvorrichtung bringt.

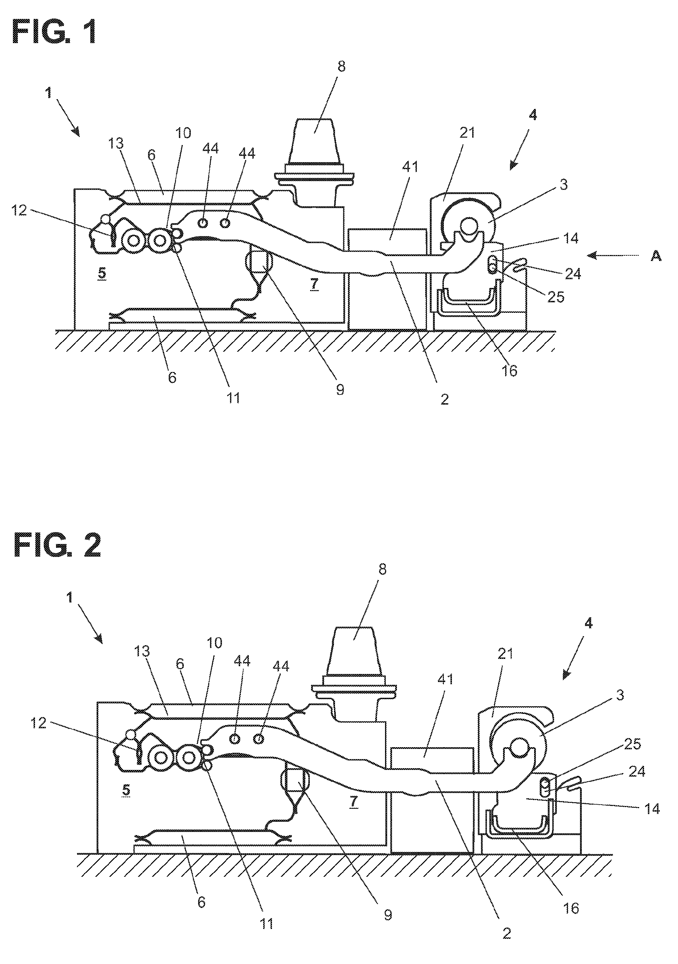

Die Figuren 1 und 2 zeigen beide eine Seitenansicht einer Kalibriergewichtsanordnung 4 und deren Position in Relation zu einer Kraftübertragungsvorrichtung 1 einer Kraftmesszelle z. B. in einer elektronischen Waage. Die Kalibriergewichtsanordnung 4 in Figur 1 befindet sich in ihrer Ruheposition und in Figur 2 ist die Situation während einer Kalibrierung dargestellt. Die Kraftübertragungsvorrichtung 1 weist eine Parallelführung mit einem feststehenden Parallelogrammschenkel 5 und einem über zwei Parallelogrammlenker 6 an diesen angelenkten beweglichen Parallelogrammschenkel 7 auf. Letzterer ist über den Konus 8 mit einer hier nicht gezeigten Waagschale verbunden und ist durch Belastung derselben gegenüber dem feststehenden Parallelogrammschenkel 5 in Richtung der Schwerkraft auslenkbar. Die Kraftübertragungsvorrichtung 1 weist ein erstes Koppelelement 9 auf, das eine in den beweglichen Parallelogrammschenkel 7 eingeleitete Kraft auf ein Hebelwerk überträgt. In der gezeigten Kraftübertragungsvorrichtung 1 besitzt das Hebelwerk einen ersten der Kraftuntersetzung dienenden Hebel 10, der über ein zweites Koppelelement 12 mit einem zweiten Hebel 11 verbunden ist. Das erste bzw. zweite Koppelelement 9, 12 greift über Dünnstellenbiegelager am ersten bzw. zweiten Hebel 10, 11 an.

Eine Auslenkung des beweglichen Parallelogrammschenkels 7 in Richtung der Schwerkraft bewirkt eine Kraftübertragung auf das Hebelwerk, welches die Kraft untersetzt und an ein hier nicht detailliert dargestelltes elektromagnetisches Kraftkompensationssystem 41 weiterleitet.

Die Parallelführung 5, 6, 7, das erste und zweite Koppelelement 9, 12 und der erste und zweite Hebel 10, 11 sind in dem im wesentlichen quaderförmigen Materialblock derart ausgebildet, dass dessen Materialbereiche durch materialfreie Bereiche in Form von dünnen, den Materialblock senkrecht zu seiner ausgedehnten Fläche durchsetzenden Schnittlinien 13 voneinander getrennt sind. Die Schnittlinien 13 werden bevorzugt mittels Funkenerosion erzeugt. Es versteht sich von selbst, dass die materialfreien Bereiche auch durch Fräsen erzeugt werden können.

Der Hebel 10 ist mit Durchgangsbohrungen versehen, an denen mittels geeigneter Befestigungsmittel 44 zwei Kalibriergewichtsträger 2 als Verlängerung des kürzeren, eingangsseitigen Hebelarms des ersten Hebels 10 angebracht sind. Der zweite Kalibriergewichtsträger 2 ist parallel zum ersten auf der gegenüberliegenden Seite der Kraftübertragungsvorrichtung 1 angeordnet und ist in dieser Darstellung verdeckt.

Wie in Figur 1 zu erkennen, ruht das Kalibriergewicht 3 während eines Wiegevorgangs auf einer Kalibriergewichtsauflage 14 und wird gegen die als Parkbügel ausgestalteten Seitenteile 21 der Kalibriergewichtsanordnung gepresst. Zur besseren Übersicht wurde in dieser Ansicht, wie auch in Figur 2 das vordere Seitenteil weggelassen. Das Kalibriergewicht 3 ist in der Ruheposition vollständig vom Hebelwerk der Kraftübertragungsvorrichtung entkoppelt.

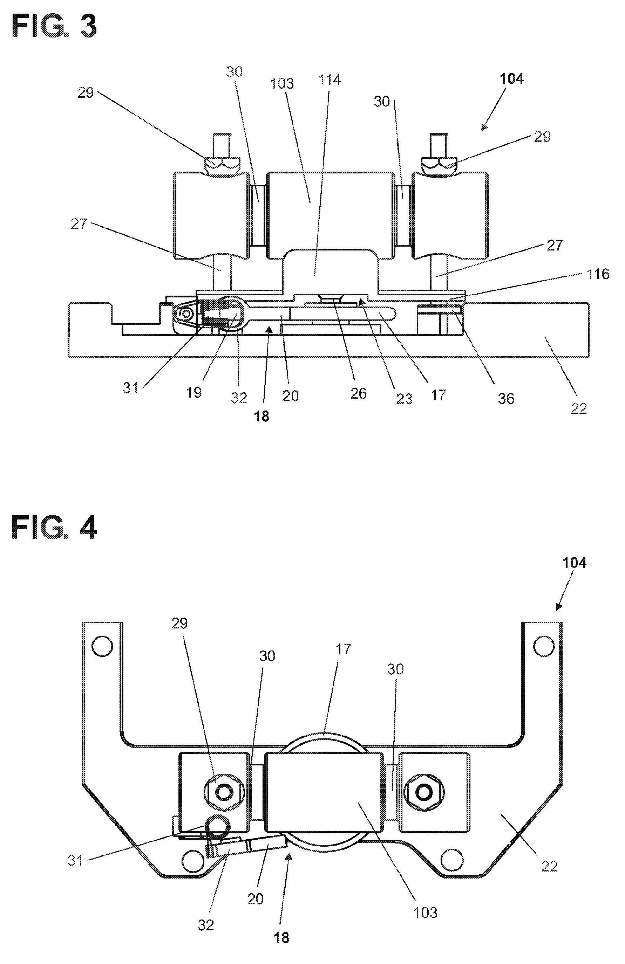

Für eine Kalibrierung wird das Kalibriergewicht mittels eines Transfermechanismus auf die beiden Kalibriergewichtsträger 2 abgesenkt und so in Kraftkontakt mit dem Hebelwerk gebracht, siehe Figur 2. Das Kalibriergewicht 3 ruht hier vollständig auf dem Kalibriergewichtsträger 2 und hat keinen Kontakt mehr zur Kalibriergewichtsauflage 14. Der Transfermechanismus wird in dieser Ansicht durch die Kalibriergewichtsauflage 14 verdeckt und ist daher in den Figuren 1 und 2 nicht zu sehen. Der Transfermechanismus weist ein Hebeelement, von dem hier nur die Hebeplattform 16 zu sehen ist, und einen hier ebenfalls nicht sichtbaren Antrieb (siehe Figuren 3 und 4) auf. Der Antrieb ist kann neben der Kalibriergewichtsanordnung 4 angeordnet sein, bezogen auf die Darstellungen vor oder hinter der Zeichnungsebene.

Die beiden als Parkbügel ausgestalteten Seitenteile 21 der Kalibriergewichtsanordnung fixieren das Kalibriergewicht 3 (s. Figur 1) in dessen Ruheposition. Zur Aufnahme des Kalibriergewichts 3 weisen die Seitenteile 21 etwa kreisförmige Aussparungen auf. In seiner Ruheposition ruht das Kalibriergewicht 3 auf der Kalibriergewichtsauflage 14. Der Antrieb ist selbsthemmend, das heisst bei ausgeschaltetem Strom verbleibt er in der aktuellen Position, welche so eingestellt wird, dass eine Kraft das Kalibriergewicht 3 leicht gegen die Parkbügel 21 presst, wodurch es gegen ein Herausspringen bei einem Fall oder Schlag geschützt ist.

Die Kalibriergewichtsauflage 14 ist in der gezeigten Ausführungsform mit der Hebeplattform 16 fest verbunden und wird durch zwei an den Seitenteilen 21 befestigte Führungsstangen 25, welche durch zwei Langlöcher 24 in der Kalibriergewichtsauflage 14 hindurch führen, vertikal geführt. Die Langlöcher 24 bestimmen den maximalen vertikalen Verschiebeweg der Kalibriergewichtsauflage 14 und dienen zusätzlich als Sicherung gegen ein mögliches Verkippen derselben.

In der Figur 3 ist in einer Seitenansicht, welche einer Sicht in Richtung des Pfeils A in Figur 1 entspräche, eine weitere Ausführungsform der Kalibriergewichtsanordnung 104 zu sehen. Diese umfasst einen Transfermechanismus mit einem Hebeelement 23, das mit einem Aktuator 18 des Antriebs zusammenwirkt. Der Antrieb weist ein piezoelektrisches Element 19 auf, welches einen Antriebsfinger 20 auf einer elliptischen Bahn bewegt. Der Antriebsfinger 20 gelangt auf dieser Bahn periodisch mit einem Antriebsrad 17 in Kontakt im Sinne einer reibschlüssigen Verbindung und bringt dieses dadurch in Rotation. Mit dem Antriebsrad 17 ist eine Welle 26 fest verbunden. Die Welle 26 weist ein Aussengewinde auf, entlang welchem eine Führungsplattform 116, die eine Bohrung mit einem mit dem Aussengewinde in Eingriff befindlichen Innengwinde besitzt, in vertikaler Richtung verschoben wird. Oberhalb der Führungsplattform 116 befindet sich die Kalibriergewichtsauflage 114. Sie ist in der gezeigten Ausführungsform einstückig mit der Führungsplattform 116 ausgebildet. Die Führungsplattform 116 wird mittels einer Führungsvorrichtung geführt, so dass sie in einer Ebene senkrecht zur Bewegungsrichtung keinen Freiheitsgrad besitzt. Die Führungsvorrichtung umfasst zwei fest mit der Unterlage 22 des Transfermechanismus verbundene Führungsstifte 27, welche sowohl das Kalibriergewicht 103 als auch die Führungsplattform 116 durchdringen. Beim Anheben der Führungsplattform 116 mit der Kalibriergewichtsauflage 114, das heisst, wenn das Kalibriergewicht 103 vom hier nicht sichtbaren Kalibriergewichtsträger abgehoben werden soll, gleitet die Führungsplattform 116 und das auf der Kalibriergewichtsauflage 114 aufliegende Kalibriergewicht 103 entlang der Führungsstifte 27 nach oben, bis das Kalibriergewicht 103 zum Anschlag an den Bolzen 29 gelangt, die die Bewegung nach oben begrenzen. Beim Absenken der Führungsplattform 116 mit der Kalibriergewichtsauflage 114, das heisst, wenn das Kalibriergewicht 103 für eine Kalibriermessung auf den hier nicht sichtbaren Kalibriergewichtsträger aufgelegt werden soll, gleitet die Führungsplattform 116 und das auf der Kalibriergewichtsauflage 114 aufliegende Kalibriergewicht 103 entlang der Führungsstifte 27 nach unten, bis die Anschlagscheiben 36, welche jeweils mit einem der Führungsstifte 27 verbunden sind, in Anschlag mit Teilen der Unterlage 22 gelangen. In dieser Situation liegt das Kalibriergewicht nicht mehr auf der Kalibriergewichtsauflage 114, sondern auf dem Kalibriergewichtsträger auf. Das Kalibriergewicht 103 ist im Wesentlichen zylinderförmig und weist zwei rundum verlaufende Nuten 30 auf für den Eingriff des hier nicht gezeigten Kalibriergewichtsträgers.

Die Figur 4 zeigt aus der Sicht von oben auf die Kalibriergewichtsanordnung 104 wie das Antriebsrad 17 und der Antriebsfinger 18 zusammenwirken. Letzterer ist bevorzugt aus Aluminium gefertigt und ist einstückig mit einem Ring 32 (siehe Figur 3) verbunden in welchen das piezoelektrische Element 19 des Antriebs eingepresst ist. Eine Feder 31 presst den Antriebsfinger 18 gegen das Antriebsrad 17, so dass während des periodisch erfolgenden Reibschlusses die auf das Antriebsrad 17 wirkende Kraft hoch genug ist, um dieses in Rotation zu versetzen. Ausserhalb der Perioden des Reibschlusses kann die Kraft des piezoelektrischen Elements 19 die Kraft der Feder 31 überwinden, so dass sich der Antriebsfinger 18 vom Antriebsrad 17 jeweils kurzzeitig löst. Eine solche Anordnung eines piezoelektrischen Antriebs und ihre Funktionsweise sind in der WO 01/71899 beschrieben.

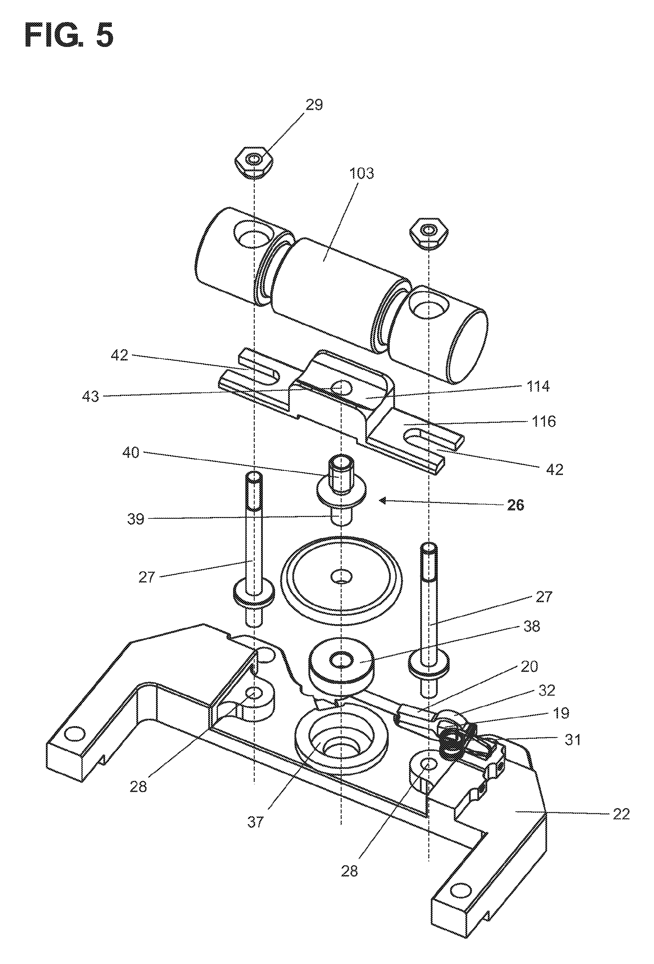

In der Figur 5 ist in einer perspektivischen Darstellung die Kalibriergewichtsanordnung 104 aus den Figuren 3 und 4 in einer Explosionszeichnung gezeigt. Die Unterlage 22 weist mittig eine runde Vertiefung 37 auf, in der ein Lager 38 eingepasst ist. In diesem Lager 38 ist die Welle 26 drehbar gelagert. Ein nach unten weisender Stift 39 der Welle 26 wird in die zentrale Öffnung des Antriebsrads 17 eingepresst, so dass beide fest miteinander verbunden sind. Ein oberer Stift 40 der Welle 26 weist ein Aussengewinde auf, welches sich in Eingriff mit dem Innengewinde der Bohrung 43 der mit der Führungsplattform 116 einstückig ausgestalteten Kalibriergewichtsauflage 114 befindet. Die Führungsplattform 116 ist seitlich je mit einer Führungsausnehmung 42 ausgestaltet, welche derart bemessen ist, dass die Führungsplattform 116 nahezu spielfrei entlang der Führungsstifte 27 gleiten kann. Das Kalibriergewicht 103 weist zwei Löcher auf, durch welche die Führungsstifte 27 im installierten Zustand hindurchreichen und mit den Bolzen 29 nach oben, im Sinne eines oberen Anschlags abgeschlossen werden. Die Führungsstifte 27 sind jeweils in eine Bohrung 43 in der Unterlage 22 eingepresst. In der Figur 5 ist ferner der Antriebsfinger 20, sowie die Feder 31 und der Ring 32 in welchem sich das den Antriebsfinger 20 auf seiner Bahn bewegende piezoelektrische Element 19 befindet, zu sehen.

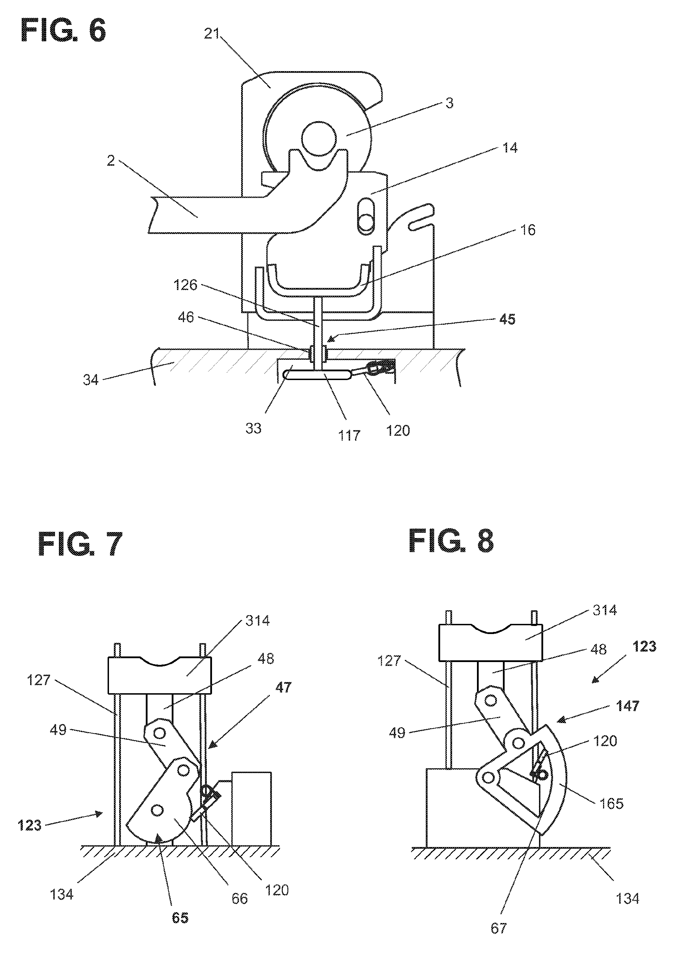

Da ein ein piezoelektrisches Element aufweisender Antrieb im Betrieb Wärme erzeugt, welche im Kraftmesszellenraum einer Waage unerwünscht ist, wird der Antrieb in einer Ausgestaltung der Kraftmesszelle, wie die Figur 6 stark schematisiert als Ausschnittvergrösserung der Figur 1 zeigt, in eine Aussparung 33 in der Grundplatte 34, auf welcher die Kraftübertragungsvorrichtung angeordnet ist, installiert. Zwischen dem Antriebsrad 117 des Aktuators und der Führungsplattform 16 verbleibt noch ein Teil der Grundplatte 34 stehen, welcher eine Öffnung 45 für den Durchtritt der Welle 126 besitzt. Innerhalb dieser Öffnung 45 ist die Welle 126 über ein Lager 46 geführt. Die überschüssige Wärme wird somit über die Grundplatte 34 und gegebenenfalls ein mit dieser verbundenes Gehäuse abtransportiert. Ein weiterer Vorteil dieser Anordnung besteht darin, dass möglicherweise vom Reibschluss zwischen Antriebsfinger 120 und Antriebsrad 117 verursachter Abrieb bereits ausserhalb des Kraftmesszellenraums anfällt und daher nicht zur Verschmutzung des Letzteren beiträgt. Eine weitere Variante sieht vor, dass, ähnlich wie in den Figuren 3 bis 5 gezeigt, der Antrieb in einer nach oben offenen Aussparung der Grundplatte untergebracht ist.

Es sind verschiedenste Ausgestaltungen für das Hebeelement einer Kalibriergewichtsanordnung denkbar, von denen gegen einander bewegte Keile oder Excenter, auf welchen jeweils eine Kalibriergewichtsauflage, sei dies mit einer Führungsplattform oder ohne eine solche, aus dem Stand der Technik bekannt sind und hier lediglich erwähnt sein sollen. Die Figuren 7 und 8 zeigen zwei weitere Ausführungsformen von Hebeelementen 123 in Form von verschiedenen Kniehebelelementen 47, 147, an welchen der Antriebsfinger 120 des ein piezoelektrisches Element aufweisenden Antriebs, direkt angreift.

In der Figur 7 ist in der Seitenansicht stark schematisiert eine Kalibriergewichtsauflage 314, die an zwei Führungsstiften 127 in vertikaler Richtung bewegbar ist, dargestellt. Das Hebeelement 123 weist ein scheibenförmiges Kniehebelelement 47 auf, dessen erstes Teil 49 mit einem an der Kalibriergewichtsauflage 314 angeordneten Dorn 48 gelenkig verbunden ist. Das erste Teil 49 des Kniehebelelements 47 ist mit einem zweiten Teil 65 ebenfalls gelenkig verbunden. Letzteres ist mit einer Unterlage, beispielsweise der Grundplatte 134 wiederum über ein Gelenk verbunden. Das zweite Teil 65 weist einen Bereich mit einer halbkreisförmigen Ausbuchtung 66 auf, an deren Aussenfläche ein Antriebsfinger 120 eines bereits oben beschriebenen Antriebs angreift. Dadurch bewegt sich die halbkreisförmige Ausbuchtung 66 entlang dem Angriffpunkt des Antriebsfingers 120, das Kniehebelelement 47 wird gestreckt und gebeugt, wodurch sich die Kalibriergewichtsauflage 314 in vertikaler Richtung bewegt.

Die Figur 8 zeigt in analoger Darstellung eine weitere Ausführungsform eines Kniehebelelements 147. Bei diesem ist das zweite Teil 165 des Kniehebelelements 147 als scheibenförmiger Rahmen mit einer teilkreisförmigen Innenfläche ausgestaltet. Der Antriebsfinger 120 greift an der Innenseite des Rahmens an und die teilkreisförmige Innenfläche bewegt sich entlang dem Angriffpunkt des Antriebsfingers 120, wodurch das Kniehebelelement 147 gestreckt und gebeugt wird und sich die Kalibriergewichtsauflage 314 in vertikaler Richtung bewegt.

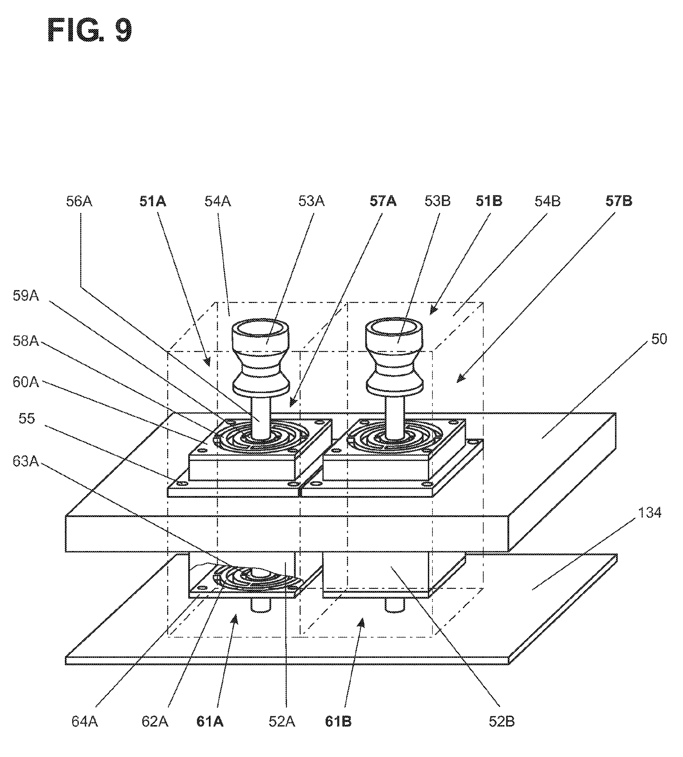

Antriebe, die ein piezoelektrisches Element aufweisen sind aufgrund des geringen Platzbedarfs besonders dazu geeignet, in einer Kalibriergewichtsanordnung für Wägemodule, die Kraftmesszellen geringer Ausdehnung in der Ebene orthogonal zur Lastrichtung aufweisen, eingesetzt zu werden. Sie treiben beispielsweise in einem Verbund von Wägemodulen die Hebeelemente in den Transfermechanismen der Kalibriergewichtsanordnungen einzelner Kraftmesszellen an. Dabei wird die Kraftübertragungsvorrichtung jeder Kraftmesszelle individuell mit einem jeweiligen Kalibriergewicht gekoppelt. Die Anordnung solcher klein dimensionierter Kraftmesszellen in einem Verbund wird anhand einer in Figur 9 dargestellten Ausführungsform beispielhaft gezeigt und im Folgenden beschrieben.

In Figur 9 ist die perspektivische Darstellung einer Aufnahmestruktur 50 mit zwei erfindungsgemässen Wägemodulen 51A, 51 B dargestellt, welche eine Vorrichtung zum Wiegen gleichgearteter Wägegüter bilden. Jedes Wägemodul 51A, 51 B weist eine Kraftmesszelle 52A, 52B und je einen zugeordneten Lastaufnehmer 53A, 53B auf. Jedes dieser Wägemodule 51A, 51 B ist in einem Bauraum 54A, 54B angeordnet. Die Ausdehnung des jeweiligen Bauraumes in der Ebene orthogonal zur Lastrichtung wird durch die Bauräume benachbarter Kraftmesszellen begrenzt oder entspricht der grössten Ausdehnung der zugeordneten Kraftmesszelle 52A, 52B in dieser Ebene im entsprechenden Bauraum 54A, 54B.

Die Ausdehnung in der Lastrichtung ist beispielsweise durch einen mit der Aufnahmestruktur fest verbundenen Gehäuseboden, beziehungsweise einer Grundplatte 134 begrenzt. Die Begrenzung der Bauräume 54A, 54B entgegen der Lastrichtung bilden beispielsweise die Oberkanten der Lastaufnehmer 53A, 53B, da sich beispielsweise oberhalb der Lastaufnehmer 53A, 53B üblicherweise der Operationsraum einer nicht dargestellten Beschickungsanlage befindet.

Das Wägemodul 51A ist durch Befestigungsmittel 55, beispielsweise Schrauben mit der Aufnahmestruktur 50 starr verbunden. Die Kraftmesszelle 52A des Wägemoduls 51A weist eine nicht dargestellte, im Innern der Kraftmesszelle 52A angeordnete Spule auf, die mit einem Kraftübertragungsgestänge 56A verbunden ist, welches die Kraftmesszelle 52A in Lastrichtung durchdringt. Am oberen Ende des Kraftübertragungsgestänges 56A ist der Lastaufnehmer 53A angebracht.

Zwischen dem Lastaufnehmer 53A und der Kraftmesszelle 52A ist eine obere Parallelführungsmembran 57A angeordnet, deren oberer Parallellenker 58A den oberen beweglichen Parallelschenkel 59A in vorgegebenem Führungsabstand mit dem oberen feststehenden Parallelschenkel 60A verbindet.

Mit Führungsabstand wird der direkte Abstand zwischen dem beweglichen Parallelschenkel 58A und dem feststehenden Parallelschenkel 59A der Parallelführungsmembran 57A bezeichnet. Dabei ist es unerheblich wie der Parallellenker 58A, welcher die beiden Schenkel verbindet, ausgestaltet ist.

Der Parallellenkers 58A ist aber so ausgestaltet, dass dessen Wirklänge wesentlich grösser ist als die Führungslänge der Parallelführungsmembran 57A. Die Wirklänge wird als die tatsächliche gestreckte Länge beziehungsweise die Länge der biegespannungsneutralen Faser des Parallellenkers 58A inklusive den dazu gehörenden Verbindungsstellen mit den Parallelschenkeln 59A, 60A definiert.

Der obere bewegliche Parallelschenkel 59A ist mit dem Kraftübertragungsgestänge 56A verbunden und der obere feststehende Parallelschenkel 60A ist an der Kraftmesszelle 52A festgelegt. Desgleichen ist auf der, dem Lastaufnehmer 53A abgewandten Seite der Kraftmesszelle 52A eine untere Parallelführungsmembran 61A angeordnet, deren unterer Parallellenker 62A den unteren beweglichen Parallelschenkel 63A mit dem unteren feststehenden Parallelschenkel 64A verbindet, wie es die gebrochen dargestellte Kraftmesszelle 52A in Figur 9 zeigt. Auch der untere bewegliche Parallelschenkel 63A ist mit dem Kraftübertragungsgestänge 56A verbunden und auch der untere feststehende Parallelschenkel 64A ist an der Kraftmesszelle 52A festgelegt.
Die Wirklänge des oberen Parallellenkers 58A sollte gegenüber der Wirklänge des unteren Parallellenkers 62A identisch sein, da sonst eine präzise Parallelführung des Kraftübertragungsgestänges 56A kaum möglich ist.

Die Beschreibung des Wägemoduls 51A gilt sinngemäss auch für das Wägemodul 51 B, dessen obere Parallelführungsmembran 57B und untere Parallelführungsmembran 61 B.

Damit nebeneinander liegende Wägemodule 51A, 51 B in einer Vorrichtung zum Wiegen gleichgearteter Wägegüter problemlos ausgetauscht werden können, darf kein Teil des jeweiligen Wägemoduls 51A über die Grenzen seines Bauraumes 54A hinausragen. Deshalb muss der beweglichen Parallelschenkel 59A innerhalb des Bauraums 54A angeordnet sein. Im äussersten Falle kann die Aussenkontur des beweglichen Parallelschenkels 59A, des Parallellenkers 58A oder des feststehenden Parallelschenkels 60A der Aussenkontur der Bauraum- Querschnittfläche orthogonal zur Lastrichtung entsprechen.

Selbstverständlich ist diese Anordnung nicht auf zwei Wägemodule 51A, 51 B beschränkt. Es können beliebig viele Wägemodule in einer flächigen Anordnung hinter- und nebeneinander angeordnet werden, wobei jeweils zwei benachbarte Kraftmesszellen in der dargestellten Weise gruppiert sind.

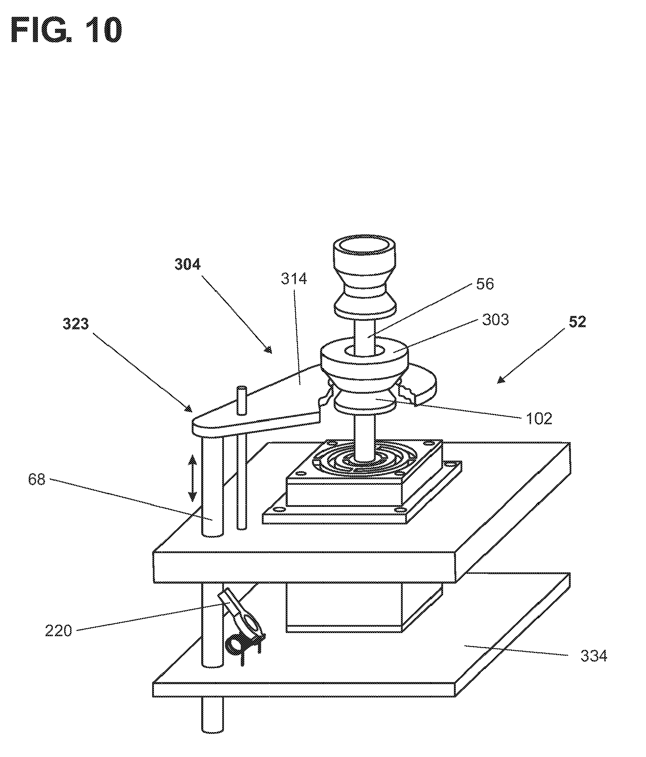

In der Figur 10 ist eine klein dimensionierte Kraftmesszelle 52, das heisst eine solche mit geringen Abmessungen in der Ebene senkrecht zur Lastrichtung mit einer speziell dafür konstruierten Kalibriergewichtsanordnung 304 gezeigt. Diese Kalibriergewichtsanordnung 304 erlaubt beispielsweise in einem Verbund von Kraftmesszellen ein individuelles Kalibrieren jeder einzelnen Kraftübertragungsvorrichtung dieser Kraftmesszellen. Die Kalibriergewichtsanordnung 304 zeichnet sich dadurch aus, dass ein Antriebsfinger 220 direkt mittels periodisch erfolgendem und sich wieder lösendem Reibschluss mit einer Vorschubstange 68 als Teil des Hebeelements 323 und als Teil des Aktuators dieses nach oben beziehungsweise nach unten bewegt.

Der Transfermechanismus weist eine plattenförmige Kalibriergewichtauflage 314 auf. Das ringförmige Kalibriergewicht 303 wird durch den Transfermechanismus von der Ruheposition in die Kalibrierposition und von der Kalibrierposition wieder in die Ruheposition transferiert.

Am Kraftübertragungsgestänge 56 ist mindestens ein hier ebenfalls ringförmiger Kalibriergewichtsträger 102 ausgebildet beziehungsweise befestigt, mit welcher das Kalibriergewicht 303 in der Kalibrierposition, wie sie die Figur 10 zeigt, in Kraftkontakt steht. Idealerweise verfügen das Kalibriergewicht 303 und/oder der Kalibriergewichtsträger 102 über Positionierungsmittel, die das Kalibriergewicht 303 gegenüber der Kalibriergewichtaufnahme 304, beziehungsweise gegenüber dem Transfermechanismus positionieren.

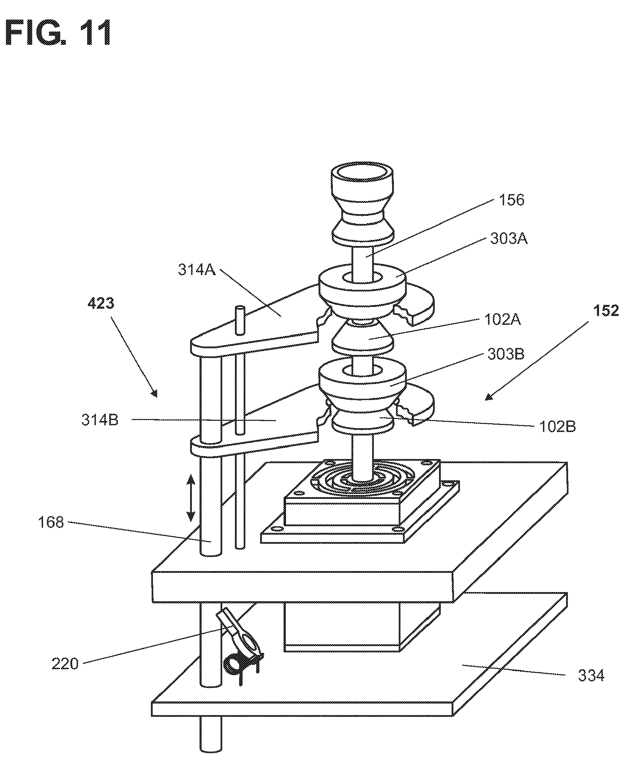

In der Figur 11 ist gezeigt, dass sich die anhand der Figur 10 beschriebene Kalibriergewichtsanordnung auch für das Anheben und Absenken von zwei Kalibriergewichten 303A, 303B eignet. Dies ist besonders nützlich, wenn Linearitätsmessungen durchgeführt werden sollen. Dabei müssen die beiden Kalibriergewichte 303A, 303B nicht notwendigerweise die gleiche Masse besitzen. Die Kalibriergewichtsanordnung der Kraftmesszelle 152 weist zwei plattenförmige Kalibriergewichtauflagen 314A, 314B auf. Wie in der Figur 11 zu sehen ist, liegt das Kalibriergewicht 303B auf dem Kalibriergewichtsträger 102B auf, befindet sich also in der Kalibrierposition und das Kalibriergewicht 303A befindet sich in Kontakt mit der Kalibriergewichtsauflage 314A. Durch weiteres Absenken der beiden plattenförmigen Kalibriergewichtauflagen 314A, 314B kommt auch das Kalibriergewicht 303A in Kontakt mit seinem Kalibriergewichtsträger 102A.

Dem Anheben und Absenken des Hebeelements 423 dient das Zusammenwirken des auf der Grundplatte 334 angebrachten piezoelektrischen Antriebs und der Vorschubstange 168, wobei - einen Aktuator bildend - der Antriebsfinger 220 in einen periodischen beziehungsweise wiederholt pulsförmigen Reibschluss mit der Vorschubstange 168 gelangt. Die Bewegungsrichtung ist bei dieser Art von Antrieb umkehrbar, das heisst die Aufwärts- und die Abwärtsbewegung wird von denselben Elementen bewerkstelligt.

Es sei an dieser Stelle erwähnt, dass abweichend von den Figuren 10 und 11 der Antrieb sowie der Transfermechanismus auch unterhalb oder oberhalb der Kraftmesszelle innerhalb des Bauraums 54A, 54B, wie er anhand der Figur 9 definiert ist, angeordnet sein kann. Beispielsweise kann in einer Ausführungsform der Kraftmesszelle 52A aus der Figur 9 das nach unten verlängerte Kraftübertragungsgestänge 56A mit einem ringförmigen Kalibriergewichtsträger ausgestattet sein. Ein ebenfalls ringförmiges Kalibriergewicht ist in der Kalibrierposition in Kontakt mit dem Kalibriergewichtsträger beziehungsweise liegt in der Ruheposition auf einer etwa gabelförmigen Kalibriergewichtsauflage auf, welche beispielsweise direkt auf dem Vorschubelement eines piezoelektrischen Antriebs angeordnet ist.

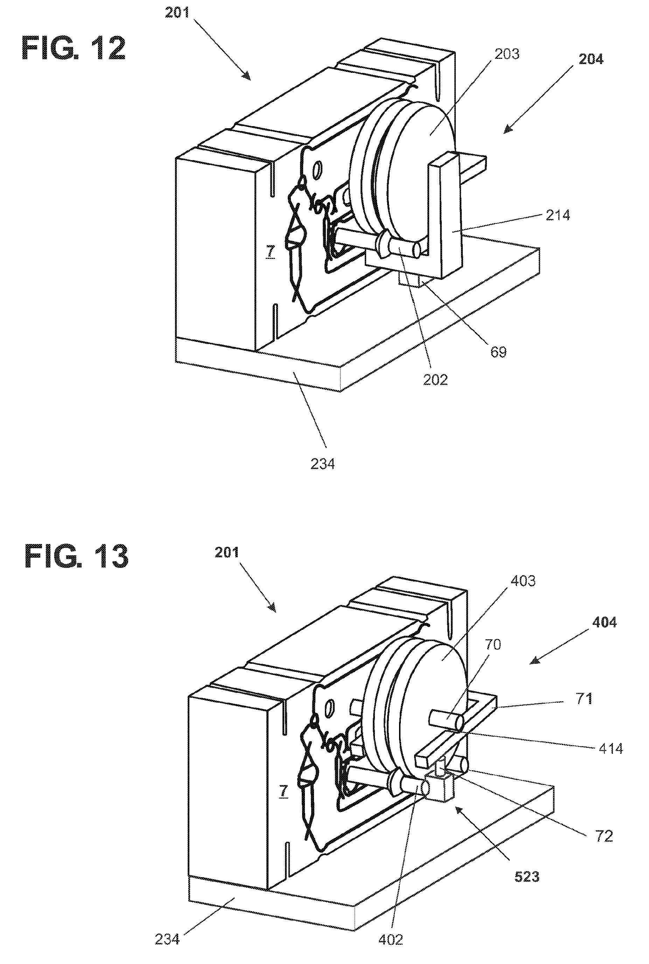

Eine weitere Ausführungsform für eine Kombination von Kalibriergewichtsanordnung 204, 404 und Kraftübertragungsvorrichtung 201 ist in der EP 0 789 232 B1 offenbart. Die Figuren 12 und 13 zeigen diese Kombination in perspektivischer Darstellung zusammen mit einem ein piezoelektrisches Element aufweisenden Antrieb. In Figur 12 sind zwei Kalibriergewichte 203, von denen nur eines zu sehen ist, seitlich an der einstückigen Kraftübertragungsvorrichtung 201 angeordnet. In der Ruhestellung liegt das Kalibriergewicht 203 vollständig auf einer Kalibriergewichtsauflage 214, welche am feststehenden Teil der Kraftübertragungsvorrichtung 201 befestigt ist, auf, ohne in das Hebelwerk der Kraftübertragungsvorrichtung 201 einzugreifen. Für eine Kalibrierung wird das Kalibriergewicht 203 durch eine Abwärtsbewegung der Kalibriergewichtsauflage 214 auf zwei Kalibriergewichtsträger 202 (nur einer ist zu sehen), welche in das Hebelwerk der Kraftübertragungsvorrichtung 201 eingreifen, gelegt und so in Kraftkontakt mit dem Hebelwerk gebracht. Eingeleitet wird die Bewegung der Kalibriergewichtsauflage 214 durch eine Aktivierung des piezoelektrischen Antriebs 69. Dabei greift die Kalibriergewichtsauflage 214 unter das Kalibriergewicht 203, hebt dieses an und trennt so den Kraftkontakt zwischen dem Kalibriergewicht 203 und dem Kalibriergewichtsträger 202.

Diese Variante der unabhängig voneinander bewegbaren seitlich angeordneten Kalibriergewichte 203 eignet sich auch dafür, diese nacheinander mit der Kalibriergewichtsauflage 214 in Kontakt zu bringen, wodurch eine Linearitätsmessung möglich wird. Dabei werden die Kalibriergewichte 203 mit den Kalibriergewichtsträgern 202 zunächst einzeln in Kontakt gebracht und vermessen und anschliessend werden beide Kalibriergewichte 203 auf dem Kalibriergewichtsträger 202 aufliegend vermessen. Es versteht sich von selbst, dass mit geringfügiger Änderung auch die in den vorangehenden Figuren gezeigten Ausführungsformen für eine Kalibriergewichtsanordnung für ein unabhängiges in Kontaktbringen von mindestens zwei Kalibriergewichten mit mindestens einem Kalibriergewichtsträger ausgestaltet werden können.

In Figur 13 sind ebenfalls zwei Kalibriergewichte 403 seitlich an der Kraftübertragungsvorrichtung 201 angebracht. Das zweite Kalibriergewicht befindet sich auf der anderen Seite der Kraftübertragungsvorrichtung 201 und wird in dieser Perspektive verdeckt. Die Kalibriergewichtsanordnung 404 weist hier eine Art Gabel 71 auf, auf welcher die Kalibriergewichtsauflage 414 ausgebildet ist. Die Gabel 71 ist an ihrem geschlossenen Ende drehbar am feststehenden Teil der Kraftübertragungsvorrichtung 201 gelagert. Damit sind beide Kalibriergewichte 403 miteinander gekoppelt. Am offenen Ende der Gabel 71 ist der Transfermechanismus angebracht. Dieser weist ein Hebeelement 523 in Form eines direkt auf die Gabel 71 wirkenden Vorschubelements 72 eines piezoelektrischen Antriebs, welcher auch als "Inchworm"-Antrieb bekannt ist, auf. Das Vorschubelement 72 ist mit der Gabel 71 verbunden. Indem es nach unten gefahren wird, wirkt eine Zugkraft auf die Kalibriergewichtsauflage 414, welche aufgrund der Krafteinwirkung nach unten kippt. Dadurch verliert das Kalibriergewicht 403, welches in seiner Ruhestellung durch einen Führungsstift 70 in der als Aussparung in der Gabel 71 geformten Kalibriergewichtsauflage 314 gehalten wird, den Kontakt zur Kalibriergewichtsauflage 414 und wird auf den Kalibriergewichtsträger 402 abgesenkt, welcher in das Hebelwerk der Kraftübertragungsvorrichtung 201 eingreift. Dieser Vorgang erfolgt beidseitig für die miteinander gekoppelten Kalibriergewichte 403 Aufgrund des so entstandenen Kraftkontakts zwischen dem Hebelwerk und den Kalibriergewichten 403, kann eine Kalibrierung durchgeführt werden. Nach Beendigung der Kalibrierung wird das Hebeelement 414 wieder nach oben gefahren, das heisst in die Ruheposition bewegt und dabei wird der Kraftkontakt zwischen den Kalibriergewichtsträgern 402 und dem Kalibriergewicht 403 getrennt. Da der ein piezoelektrische Element aufweisende Antrieb selbsthemmend ist, das heisst im stromlosen Zustand das Vorschubelement 72 stets in seiner aktuellen Position gehalten wird, ist die jeweilige Position der Kalibriergewichtsauflage 414 stabil ohne weiteres Zutun.

Es versteht sich von selbst, dass eine Vielzahl von Antrieben, die mindestens ein piezoelektrisches Antriebselement aufweisen hier Verwendung finden können. Es sei hier beispielhaft auf einen Wanderwellenmotor, einen Ultraschallmotor mit ringförmigem piezoelektrischem Antriebselement, einen piezoelektrischen Liearantrieb oder einen so genannten Catarpillar Linearantrieb verwiesen.

Insbesondere kann der Antrieb eine Sensorfunktionalität zur Funktionskontrolle des Transfermechanismus aufweisen. Die Überwachung des Stroms zur Aktivierung des piezoelektrischen Elements oder die der Induktivität des Regelkreises kann beispielsweise dazu herangezogen werden, die Position des Hebeelements beziehungsweise des Kalibriergewichts festzustellen.

Die vorgestellten bevorzugten Ausführungsbeispiele zeigen die Kombination einer Kalibriergewichtsanordnung mit einer einstückigen, für ein Arbeiten nach dem Prinzip der elektromagnetischen Kraftkompensation geeigneten Kraftübertragungsvorrichtung. Es sind andere Kraftübertragungsvorrichtungen bekannt, welche mit einer Kalibriergewichtsanordnung, wie sie in den Figuren gezeigt wurde, kombiniert werden können. Als Beispiele seien hier ein Verformungskörper, wie er in einer DMS-Messzelle eingesetzt wird, oder eine konventionelle aus mehreren miteinander verbundenen Bauteilen bestehende Kraftübertragungsvorrichtung genannt. Jegliche derartige Kraftübertragungsvorrichtungen können selbstverständlich auch mit einer Kalibriergewichtsanordnung mit einem ein piezoelektrisches Element aufweisenden Antrieb, wie sie in den Ausführungsbeispielen beschrieben wurden, kombiniert werden.

Kalibrieranordnungen der hier vorgestellten Art können sowohl in hochauflösenden als auch in weniger hochauflösenden Waagen eingesetzt werden.

### Bezugszeichenliste

- 1, 201: Kraftübertragungsvorrichtung
- 2, 102, 202: Kalibriergewichtsträger
- 3, 103, 203, 303, 303A, 303B, 403: Kalibriergewicht
- 4, 104, 204, 304, 404: Kalibriergewichtsanordnung
- 5: feststehender Parallelogrammschenkel
- 6: Parallelogrammlenker
- 7: beweglicher Parallelogrammschenkel
- 8: Konus
- 9: erstes Koppelelement
- 10: erster Hebel
- 11: zweiter Hebel
- 12: zweites Koppelelement
- 13: Schnittlinie
- 14, 114, 214, 314, 314A, 314B: Kalibriergewichtsauflage
- 16, 116: Hebeplattform, Führungsplattform
- 17, 117: Antriebsrad
- 18: Aktuator
- 19: Piezoelektrisches Element
- 20, 120, 220: Antriebsfinger
- 21: als Parkbügel ausgestaltetes Seitenteil
- 22: Unterlage
- 23, 123, 223, 323, 423: Hebeelement
- 24: Langloch
- 25: Führungsstange
- 26, 126: Welle
- 27, 127: Führungsstift
- 28: Bohrung
- 29: Bolzen
- 30: Nut
- 31: Feder
- 32: Ring
- 33: Aussparung
- 34, 134, 234, 334: Grundplatte
- 35: Aussparung
- 36: Anschlagscheiben
- 37: Vertiefung
- 38: Lager
- 39: Unterer Stift der Welle
- 40: Oberer Stift der Welle mit Gewinde
- 41: Kraftkompensationssystem
- 42: Führungsausnehmung
- 43: Bohrung mit Innengewinde
- 44: Befestigungsmittel
- 45: Öffnung in der Grundplatte
- 46: Lager
- 47, 147: Kniehebelelement
- 48: Dorn
- 49: Erstes Teil des Kniehebelelement
- 50: Aufnahmestruktur
- 51A, 51 B: Wägemodul
- 52, 52A, 52B, 152: Kraftmesszelle
- 53A, 53B: Lastaufnehmer
- 54A, 54B: Bauraum
- 55: Befestigungsmittel
- 56, 56A, 156: Kraftübertragungsgestänge
- 57A, 57B: obere Parallelführungsmembran
- 58A: oberer Parallellenker
- 59A: oberer beweglicher Parallelschenkel
- 60A: oberer feststehender Parallelschenkel
- 61A, 61 B: untere Parallelführungsmembran
- 62A: unterer Parallellenker
- 63A: unterer beweglicher Parallelschenkel
- 64A: unterer feststehender Parallelschenkel
- 65, 165: Zweites Teil des Kniehebelelements
- 66: Bereich mit halbkreisförmiger Ausbuchtung
- 67: Teilkreisförmige Innenfläche
- 68, 168: Vorschubstange
- 69: Antrieb
- 70: Führungsstift
- 71: Gabel
- 72: Vorschubelement

## Patentansprüche

1. Kalibriergewichtsanordnung (4, 104, 204, 304, 404) für eine eine Kraftübertragungsvorrichtung (1, 201) aufweisende elektronische Waage, wobei die Kalibriergewichtsanordnung (4, 104, 204, 304, 404) mindestens ein mit der Kraftübertragungsvorrichtung (1, 201) koppelbares Kalibriergewicht (3, 103, 203, 303, 303A, 303B, 403), einen Antrieb und einen Transfermechanismus zur geführten Bewegung des Kalibriergewichts (3, 103, 203, 303, 303A, 303B, 403) umfasst, **dadurch gekennzeichnet, dass** der Antrieb einen mit dem Transfermechanismus zusammenwirkenden Aktuator (18) und mindestens ein den Aktuator (18) antreibendes piezoelektrisches Element (19) aufweist, und dass der Aktuator (18) mindestens zwei Elemente umfasst, die mittels mindestens eines wiederholt erfolgenden und sich wieder lösenden Reibschlusses miteinander in Wechselwirkung stehen.

2. Kalibriergewichtsanordnung nach Anspruch 1, **dadurch gekennzeichnet, dass** der Transfermechanismus ein Hebeelement (23, 123, 223, 323, 423), eine Kalibriergewichtsauflage (14, 114, 214, 314, 314A, 314B) und eine Führungsvorrichtung aufweist, wobei eine in der Führungsvorrichtung geführte Vertikal- und/oder Rotationsbewegung des Hebeelements (23, 123, 223, 323, 423) mit der Kalibriergewichtsauflage (14, 114, 214, 314, 314A, 314B) ausführbar ist.

3. Kalibriergewichtsanordnung nach Anspruch 1 oder 2, **dadurch gekennzeichnet, dass** die aktuelle Position der Kalibriergewichtsauflage (14, 114, 214, 314, 314A, 314B) im stromlosen Zustand des Antriebs durch Selbsthemmung des Antriebs fixierbar ist.

4. Kalibriergewichtsanordnung nach Anspruch 1, 2 oder 3, **dadurch gekennzeichnet, dass** der der Antrieb einen piezoelektrischen Linearmotor umfasst, der mindestens ein piezoelektrisches Element (19) und ein Vorschubelement (68, 168, 72) aufweist.

5. Kalibriergewichtsanordnung nach Anspruch 4, **dadurch gekennzeichnet, dass** auf dem Vorschubelement (68, 168, 72) des Linearmotors direkt die Kalibriergewichtsauflage (214, 314, 314A, 314B, 414) angeordnet ist.

6. Kalibriergewichtsanordnung nach einem der Ansprüche 1 bis 3, **dadurch gekennzeichnet, dass** der der Antrieb einen rotatorischen piezoelektrischen Motor, insbesondere einen Wanderwellenmotor oder einen mit einem ringförmigen Piezoelement versehenen Motor, umfasst, welcher eine Welle (26) aufweist, auf der das Hebeelement (23) mittels einer in die Welle (26) integrierten Spindel eine Vertikalbewegung ausführt.

7. Kalibriergewichtsanordnung nach einem der Ansprüche 1 bis 6, **dadurch gekennzeichnet, dass** der piezoelektrische Antrieb eine integrierte Sensorfunktionalität zur Funktions- und/oder Positionskontrolle des Transfermechanismus aufweist.

8. Kalibriergewichtsanordnung nach einem der Ansprüche 1 bis 7, **dadurch gekennzeichnet, dass** das piezoelektrische Element (19) des Antriebs einen Antriebsfinger (20, 120) auf einer elliptischen Bahn bewegt, wobei einen Aktuator (18) bildendend der Antriebsfinger (20, 120) auf dieser Bahn periodisch mit einem Antriebsrad (17, 117) in Kontakt im Sinne einer reibschlüssigen oder formschlüssigen Verbindung gelangen kann.

9. Kalibriergewichtsanordnung nach Anspruch 8, **dadurch gekennzeichnet, dass** mittels des Aktuators (18) eine mit einem Aussengewinde versehene Welle (26, 126) zur Rotation bringbar ist, entlang welcher Welle (26, 126) eine mit einem Innengewinde versehene Führungsplattform (16, 116) verschiebbar ist.

10. Kalibriergewichtsanordnung nach einem der Ansprüche 2 bis 8, **dadurch gekennzeichnet, dass** das Hebeelement des Transfermechanismus als Excenter oder als sich paarweise gegeneinander verschiebende Keile ausgestaltet ist.

11. Kalibriergewichtsanordnung nach einem der Ansprüche 2 bis 8, **dadurch gekennzeichnet, dass** das Hebeelement (123) des Transfermechanismus als mindestens ein Kniehebelelement (47, 147) ausgebildet ist.

12. Kalibriergewichtsanordnung nach Anspruch 11, **dadurch gekennzeichnet, dass** das Kniehebelelement (47) mit einander gelenkig verbundene scheibenförmige Teile (49, 65) aufweist, wovon eines einen Bereich mit einer halbkreisförmigen Ausbuchtung (66) aufweist, an deren Aussenfläche ein Antriebsfinger (120) angreift.

13. Kalibriergewichtsanordnung nach Anspruch 11, **dadurch gekennzeichnet, dass** das Kniehebelelements (147) mit einander gelenkig verbundene scheibenförmige Teile (49, 165) aufweist, wovon eines als scheibenförmiger Rahmen mit einer teilkreisförmigen Innenfläche (67) ausgestaltet ist, an welcher ein Antriebsfinger (120) angreift.

14. Kalibriergewichtsanordnung nach einem der Ansprüche 1 bis 13, **dadurch gekennzeichnet, dass** die Kraftübertragungsvorrichtung (4, 104, 204, 304, 404) auf einer Grundplatte (34) angeordnet ist und dass der Antrieb in einer Aussparung (33) in der Grundplatte (34) angeordnet ist.

15. Kalibriergewichtsanordnung nach Anspruch 14, **dadurch gekennzeichnet, dass** die Grundplatte (34) im Bereich der Aussparung eine geringere Dicke aufweist und eine Öffnung (45) für den Durchtritt mindestens eines Teils des Hebeelements.

16. Kraftmesszelle (52, 52A, 52B, 152) geeignet zum Einbau in eine Aufnahmestruktur mit mehreren Kraftmesszellen (52, 52A, 52B, 152), wobei die Kraftmesszelle (52, 52A, 52B, 152) in einem Bauraum (54A, 54B) angeordnet ist, dessen Ausdehnung in einer Ebene orthogonal zur Lastrichtung durch die Bauräume (54A, 54B) benachbarter Kraftmesszellen (52, 52A, 52B, 152) begrenzt ist, **dadurch gekennzeichnet, dass** die Kraftmesszelle (52, 52A, 52B, 152) eine Kalibriergewichtsanordnung (4, 104, 204, 304, 404) gemäss einem der Ansprüche 1 bis 15 aufweist.

17. Kraftmesszelle nach Anspruch 16, **dadurch gekennzeichnet, dass** das piezoelektrische Element (19) des Antriebs einen Antriebsfinger (220) auf einer elliptischen Bahn bewegt, wobei der Antriebsfinger (220) auf dieser Bahn periodisch direkt mit dem Hebeelement (68, 323, 168, 323A, 323B) oder der Kalibriergewichtsauflage (214, 314, 314A, 314B) in Kontakt bringbar ist.

18. Kraftmesszelle nach Anspruch 16 oder 17, **dadurch gekennzeichnet, dass** der Antrieb und der Transfermechanismus unterhalb oder oberhalb der jeweiligen Kraftmesszelle (52, 52A, 52B, 152) innerhalb deren Bauraum (54A, 54B) angeordnet sind.
